# EUROPEAN PATENT SPECIFICATION

(11) **EP 3 686 442 B1**
(45) Date of publication and mention of the grant of the patent: **19.07.2023**
(21) Application number: 19872241.5
(22) Date of filing: 06.08.2019
(51) Int. Cl.: F15B 11/16, E02F 9/22, F15B 11/00, F15B 11/17, F15B 13/08

(54) **FLUID PRESSURE CONTROL DEVICE**
FLUIDDRUCKSTEUERUNGSVORRICHTUNG
DISPOSITIF DE RÉGULATION DE PRESSION DE FLUIDE

(30) Priority: 20.11.2018 JP 2018217347
(43) Date of publication of application: 29.07.2020
(73) Proprietor: KYB Corporation, Tokyo 105-6111 (JP)
(72) Inventor: KITANI, Toshiyuki, Tokyo 105-61111 (JP); YOSHIDA, Nobuyoshi, Tokyo 105-61111 (JP)
(74) Representative: Grünecker Patent- und Rechtsanwälte PartG mbB
(86) International application number: PCT/JP2019/030976
(87) International publication number: WO 2020/105231

(56) References cited:
- DE-A1- 2 440 251
- JP-A- H0 449 196
- JP-A- H0 449 196
- JP-A- H11 230 112
- JP-A- H11 257 302
- JP-A- H11 270 504
- JP-A- 2001 153 102
- JP-A- 2013 147 864
- JP-A- 2013 147 864
- JP-A- 2016 204 826

## Description

### TECHNICAL FIELD

The present invention relates to a fluid pressure control device.

### BACKGROUND ART

JP2016-204826A discloses a fluid pressure control device including: a first circuit system with a plurality of control valves connected to a first pump; and a second circuit system with a plurality of control valves connected to a second pump. The fluid pressure control device according to JP2016-204826A is provided with a neutral cut valve adapted to make a first neutral passage and a tank communicate with each other or block the communication therebetween, and an external output passage that is in communication with an upstream side of the neutral cut valve and through which a working fluid discharged from the first pump can be supplied to the outside. Thus, the working fluid can be drawn out from the first circuit system to the outside through the external output passage.

### SUMMARY OF INVENTION

As described above, in the fluid pressure control device according to JP2016-204826A, the working fluid can be drawn out to a circuit system different from the first circuit system through the external output passage. However, the first circuit system is provided with only one external output passage. Thus, in the fluid pressure control device according to JP2016-204826A, a circuit system other than that connected to the external output passage cannot be added and connected to the first circuit system, and thus there is a problem that a degree of freedom in terms of circuit system expansion is low. The fluid pressure control device according to JP2016-204826A requires dedicated valves and the like to be provided for supplying working fluid to a circuit system additionally provided, and this has a risk of leading to a large-scale valve block.
Document DE 24 40 251 A1 discloses two pumps on a dredger each perform three functions and the system permits each pump to help the other, when possible. Previous systems have evolved using two extra control valves, one for each pump, and each serving only one of the users of the other pump. Instead, the present system allows all users to be assisted. Moreover, it uses only one extra valve which is an integral part of the control system of one pump. The output of the second pump is connected to it. When the extra valve switches to its alternative condition, it connects a lead from the output of the first pump to the circulation the second pump feeds.
From JP 2013 147 864A it is known a hydraulic circuit adopting a three-pump/three-circuit system in which the overall circuit is divided into first to third circuits A, B and C and the circuits are driven basically by first to third pumps. Furthermore, the hydraulic circuit comprises a confluent valve in which a third pump oil discharged from the third pump is sent to the first circuit A or the second circuit B and is made confluent with an oil from the first pump or the second pump. In the hydraulic circuit, a quick hitch cylinder for mounting/demounting a work device such as a bucket is connected to the third pump in a parallel state with the third circuit C. On the other hand, in the confluent valve, a fourth position is provided where confluent paths and a tank path are shut off with respect to the third pump and at the fourth position, the quick hitch cylinder is operated.
Document JP H04 49196 A describes a first compound control valve having direction switching valves for controlling a direction of driving actuators driven by delivered oil of a first pump and a second compound control valve having direction switching valves for controlling a direction of driving actuators driven by delivery oil of the second pump. A selector valve is controlled by operation pilot signals of the valves of the control valve and operation pilot signals of the valves of the control valve while providing the branch selector valve in a branch point relating to a branch center bypass passage and a branch confluent pipe line of a center bypass passage in the control valve.

An object of the present invention is to provide a fluid pressure control device with a high degree of freedom in terms of circuit system expansion while preventing a main valve block from being of a large scale.

This object is solved by the subject matter of claim 1.

### BRIEF DESCRIPTION OF DRAWINGS

FIG. 1 is a circuit diagram illustrating a fluid pressure control device according to a first embodiment not encompassed by the wording of the claims.
FIG. 2 is a schematic perspective view of a main valve block and a sub valve block.
FIG. 3 is a circuit diagram illustrating a fluid pressure control device according to a second embodiment according to the present invention.

### DESCRIPTION OF EMBODIMENTS

### <First embodiment>

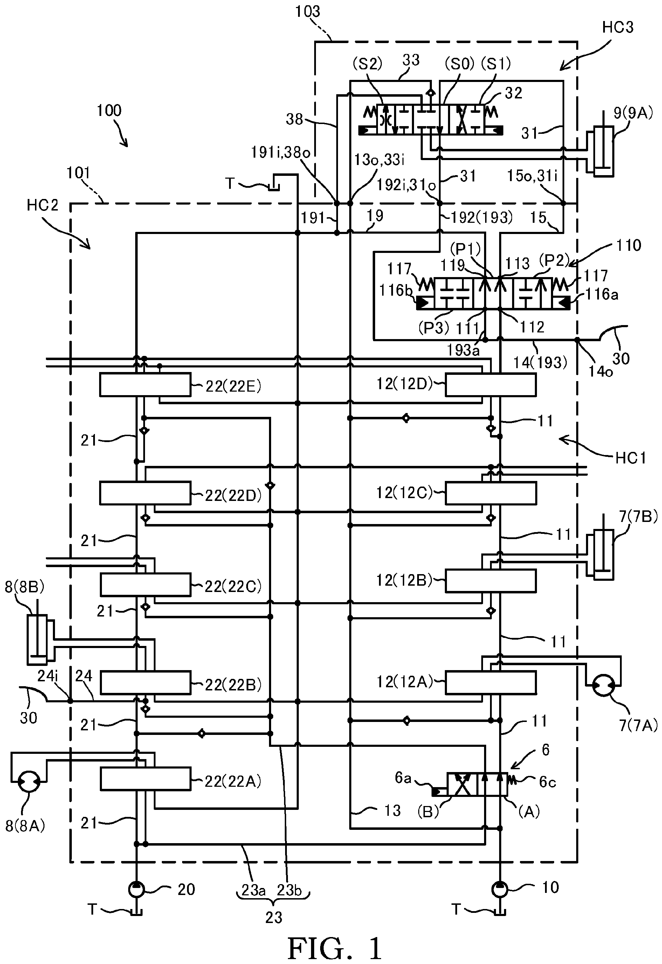

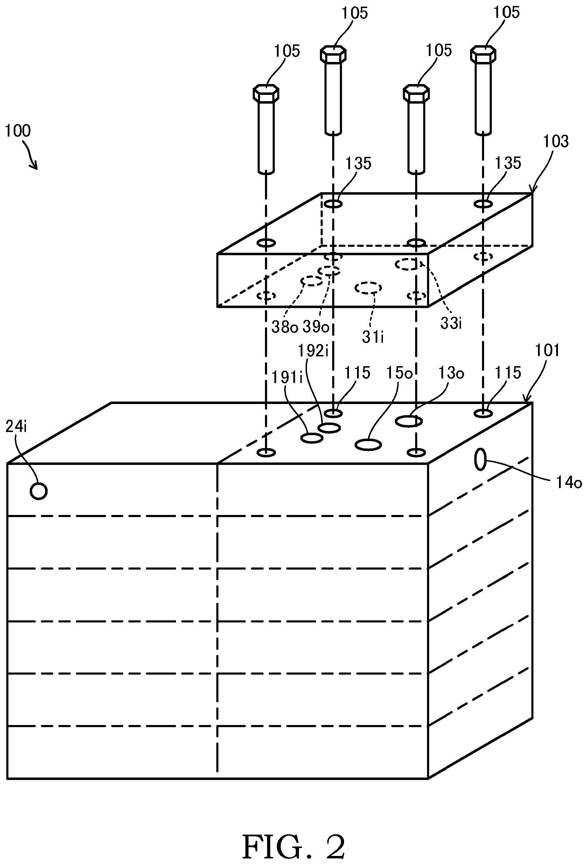

A fluid pressure control device 100 according to a first embodiment not encompassed by the wording of the claims will be described with reference to FIG. 1 and FIG. 2.

For example, the fluid pressure control device 100 is used for a working machine such as a power excavator. Here, a case where the working machine is a power excavator will be described. However, the fluid pressure control device 100 can be applied to other working machines such as a wheel loader. In the fluid pressure control device 100, working oil is used as a working fluid. However, other types of fluid such as working water may be used as the working fluid.

Although not elaborated in the figure, the power excavator includes a traveling unit of a crawler type, a swiveling unit that is provided on an upper part of the traveling unit to be able to swivel, and an excavating unit that is provided to the swiveling unit. The traveling unit includes a pair of left and right crawlers. The power excavator travels with the pair of left and right crawlers driven. The excavating unit includes a boom that is pivotally attached to the swiveling unit, an arm that is pivotally attached to the boom, and a bucket that is pivotally attached to the arm.

As illustrated in FIG. 1, the power excavator includes an engine (not illustrated), a first pump 10 and a second pump 20 serving as hydraulic pressure pumps that is driven by the engine to discharge the working oil, a fluid pressure control device 100 that controls actuators for driving the traveling unit, the swiveling unit, and the excavating unit by using the working oil discharged from the first pump 10 and the second pump 20, and a tank T to which the working oil returns from the fluid pressure control device 100.

The fluid pressure control device 100 controls a plurality of actuators that are driven by the working oil discharged from the first pump 10 and the second pump 20. Examples of the plurality of actuators include traveling unit driving hydraulic motors 7A and 8A, a swiveling unit driving hydraulic motor (not illustrated), an arm driving hydraulic cylinder (not illustrated), a bucket driving hydraulic cylinder 7B, an auxiliary attachment driving hydraulic cylinder 8B, an additional attachment driving hydraulic cylinder 9A, and the like.

Examples of the auxiliary attachment and the additional attachment include a breaker and crusher attached instead of the bucket, an offset device that causes a sliding movement of the boom in a left and right direction, a dozer blade attached to the swiveling unit, and the like.

The fluid pressure control device 100 includes: a first circuit system HC1 that is connected to the first pump 10 and receives working oil supplied from the first pump 10; a second circuit system HC2 that is connected to the second pump 20 and receives working oil supplied from the second pump 20; and a third circuit system HC3 that is connected to the first circuit system HC1 and receives working oil supplied from the first pump 10 via a neutral cut valve 110 described later. As will be described later, a straight traveling control valve 6 is switched so that the working oil discharged from the first pump 10 is also supplied to the second circuit system HC2 and the working oil discharged from the second pump 20 is also supplied to the first circuit system HC1 and the third circuit system HC3.

As illustrated in FIG. 1 and FIG. 2, the fluid pressure control device 100 includes: a main valve block 101 including the first circuit system HC1 and the second circuit system HC2; and a sub valve block 103 including the third circuit system HC3. As illustrated in FIG. 2, the sub valve block 103 can be attached to the main valve block 101 by using a plurality of bolts 105. The main valve block 101 may be formed by stacking and fastening a plurality of valve blocks, or may be formed by a single valve block.

The main valve block 101 has bolt attachment holes 115, for attaching the bolts 105, opening in the outer surface. The sub valve block 103 is fixed to the main valve block 101 with the sub valve block 103 placed on the main valve block 101, shaft portions of the bolts 105 inserted through bolt insertion holes 135 of the sub valve block 103, and tip portions of the shaft portions of the bolts 105 screwed to the bolt attachment holes 115.

The sub valve block 103 is provided adapted to control the hydraulic cylinder 9A for driving the additional attachment. Conventionally, to control the hydraulic cylinder 9A for driving the additional attachment, the third circuit system HC3 has been required to be connected to a new hydraulic pump different from the first pump 10 or the second pump 20, with the sub valve block 103 provided to be separate from the main valve block 101.

On the other hand, according to the present embodiment, the sub valve block 103 can be attached on the main valve block 101, whereby an installation area of the fluid pressure control device 100 can be reduced. Furthermore, no pipe needs to be provided between the main valve block 101 and the sub valve block 103, whereby an installation space of the fluid pressure control device 100 can be made small. Furthermore, as will be described later, no new hydraulic pump needs to be connected to the sub valve block 103 because the working oil from the first pump 10 is supplied to the sub valve block 103 through the main valve block 101. All things considered, according to the present embodiment, the number of parts and cost can be reduced compared with a case where the sub valve block 103 connected with the new hydraulic pump is provided to be separate from the main valve block 101.

As illustrated in FIG. 1, the first circuit system HC1 includes: a first neutral passage 11 through which working oil discharged from the first pump 10 is guided to a tank T; a plurality of first control valves 12 connected in series with the first neutral passage 11; a first parallel passage 13 branched off from the first neutral passage 11 more on the upstream side than a straight traveling control valve 6 described later; and a discharge passage 19 connected to the tank T. The plurality of first control valves 12 are connected in series through the first neutral passage 11, and are connected in parallel through the first parallel passage 13.

The first control valves 12 that are control valves adapted to control an actuator provided to the first circuit system HC1 include a first traveling control valve 12A, a bucket control valve 12B, a boom first speed control valve 12C, and an arm second speed control valve 12D. The working oil discharged from the first pump 10 is guided to the first traveling control valve 12A, the bucket control valve 12B, the boom first speed control valve 12C, and the arm second speed control valve 12D in this order from the upstream side.

The first traveling control valve 12A is adapted to control supplying/discharging of the working oil to/from the traveling unit driving hydraulic motor 7A, provided on the left side of the vehicle body of the power excavator. The bucket control valve 12B is adapted to control supplying/discharging of the working oil to/from the bucket driving hydraulic cylinder 7B. The boom first speed control valve 12C is adapted to control supplying/discharging of the working oil to/from a boom driving hydraulic cylinder (not illustrated). The arm second speed control valve 12D is adapted to control supplying/discharging of the working oil to/from an arm driving hydraulic cylinder (not illustrated). The main actuators (such as the hydraulic motor 7A and the hydraulic cylinder 7B) controlled using the first control valves 12 are also collectively referred to as a first actuator 7.

As described above, the first circuit system HC1 includes the plurality of first control valve 12 that are connected to the first pump 10, and are used adapted to control the plurality of first actuators 7. The discharge passage 19 guides the working oil discharged from the first actuator 7 via the first control valve 12 to the tank T.

The main valve block 101 includes the neutral cut valve 110 that is disposed on the downstream side of all the first control valves 12 in the first neutral passage 11 (that is, the downstream side of the arm second speed control valve 12D), and makes the first neutral passage 11 and the discharge passage 19 communicate with each other or blocks the communication therebetween.

The neutral cut valve 110 is a pilot switching valve with a spool switched between the first position (P1) and the second position (P2) in accordance with pilot pressure supplied to a first pilot pressure chamber 116a. The pilot pressure applied to the first pilot pressure chamber 116a is controlled on the basis of an operation state of the power excavator, an operation position of a dedicated operation member (not illustrated) for operating the neutral cut valve 110, and the like. In the present embodiment, the second pilot pressure chamber 116b is connected to the drain, and does not switch to the third position (P3).

The neutral cut valve 110 includes: a pump port 112 connected to the first neutral passage 11; an outlet port 113 connected to a first external output passage 15 described later and through which the working oil is guided to the sub valve block 103; a connection port 111 connected to a branch passage 193a described later; and a tank port 119 connected to the discharge passage 19. In the present embodiment, the connection port 111 functions as a return port through which the working oil from the sub valve block 103 is guided.

When the neutral cut valve 110 is at the first position (P1), the pump port 112 and the outlet port 113 communicate with each other, and the connection port 111 and the tank port 119 communicate with each other. When the neutral cut valve 110 is at the second position (P2), the pump port 112 and the outlet port 113 communicate with each other, and the communication between the connection port 111 and the tank port 119 is blocked.

The main valve block 101 further includes: a first external output port 15o through which the working oil discharged from the first pump 10 can be supplied to the sub valve block 103 outside via the neutral cut valve 110; the first external output passage 15 connected to the first external output port 15o; a first external input port 192i through which the working oil supplied from the first external output port 15o to the sub valve block 103 and returning to the main valve block 101 from the sub valve block 103 can be introduced, a first external input passage 192 connected to the first external input port 192i; a second external output port 14o through which the working oil introduced through the first external input port 192i can be supplied to the outside; a second external output passage 14 connected to the second external output port 14o, a first parallel passage 13 branched off from the first neutral passage 11 and connected in parallel with the plurality of first control valves 12; a parallel output port 13o through which the working oil guided to the first parallel passage 13 can be supplied to the sub valve block 103 outside, a tank input port 191i through which the working oil from the sub valve block 103 can be introduced to the discharge passage 19 of the main valve block 101; and a second external input port 24i through which working oil can be introduced from the outside.

The first external output port 15o communicates with the outlet port 113 of the neutral cut valve 110 through the first external output passage 15. The tank input port 191i is connected to the branch passage 191 branched off from the discharge passage 19.

The first external input port 192i communicates with the connection port 111 of the neutral cut valve 110 through the first external input passage 192. The second external output port 14o communicates with the connection port 111 of the neutral cut valve 110 through the second external output passage 14. The first external input port 192i and the second external output port 14o communicate with each other through the first external input passage 192 and the second external output passage 14.

In other words, the first external input port 192i communicates with the second external output port 14o through a communication passage 193 including the first external input passage 192 and the second external output passage 14. The branch passage 193a branched off from the communication passage 193 is connected to the connection port 111 of the neutral cut valve 110.

As illustrated in FIG. 2, the first external output port 15o, the parallel output port 13o, the first external input port 192i, and the tank input port 191i is opening in an upper surface which is a part of the outer surface of the main valve block 101. The second external output port 14o is opening in a first side surface that is a part of the outer surface of the main valve block 101. The second external input port 24i is opening in a second side surface that is a part of the outer surface of the main valve block 101.

In the present embodiment, the sub valve block 103 is adapted to be attached to the main valve block 101 so that the working oil discharged from the first pump 10 can also be supplied to the third circuit system HC3 through the first circuit system HC1. When the sub valve block 103 is attached, the ports (13o, 15o, 191i, 192i) opening in the outer surface of the main valve block 101 are connected to the respective ports (33i, 31i, 38o, 31o) opening in the outer surface of the sub valve block 103.

With the sub valve block 103 thus attached to the main valve block 101, the third actuator 9 drivable with the working oil discharged from the first pump 10 or the second pump 20 in a manner similar to that of the first actuator 7 can be easily added. The third circuit system HC3 added by attaching the sub valve block 103 is described in detail. In the description, the neutral cut valve 110 is assumed to be at the first position (P1).

As illustrated in FIG. 1, the third circuit system HC3 includes: a third control valve 32 adapted to control the third actuator 9 serving as a sub actuator by using the working oil supplied from the first pump 10; a third neutral passage 31 through which the working oil guided from the first neutral passage 11 through the neutral cut valve 110 and the first external output port 15o, returns to the tank T when the third control valve 32 is at the neutral position; a third parallel passage 33 through which the working oil guided from the first parallel passage 13 is guided to the third control valve 32; and a discharge passage 38 through which the working oil discharged from the third actuator 9 through the third control valve 32 is guided.

The third control valve 32 is adapted to control supplying and discharging of the working oil to and from the hydraulic cylinder 9A serving as a third actuator 9 that drives an additional attachment, in accordance with the pilot pressure acting on the pilot pressure chamber.

The third neutral passage 31 is connected to an introduction port 31i on the upstream side of the third control valve 32, and is connected to the extraction port 31o on the downstream side of the third control valve 32. The introduction port 31i of the sub valve block 103 is connected to the first external output port 15o of the main valve block 101. The extraction port 31o of the sub valve block 103 is connected to the first external input port 192i of the main valve block 101. Thus, the third neutral passage 31 is connected to the first external output passage 15 through the introduction port 31i and the first external output port 15o, and is connected to the first external input passage 192 through the extraction port 31o and the first external input port 192i. Thus, the first external output port 15o communicates with the first external input port 192i via the third control valve 32 of the sub valve block 103.

The third parallel passage 33 is connected to a parallel input port 33i and the discharge passage 38 is connected to a tank output port 38o. The parallel input port 33i of the sub valve block 103 is connected to a parallel output port 13o of the main valve block 101, and the tank output port 38o of the sub valve block 103 is connected to the tank input port 191i of the main valve block 101. Thus, the third parallel passage 33 is connected to the first parallel passage 13 through the parallel input port 33i and the parallel output port 13o, and the discharge passage 38 is connected to the discharge passage 19 through the tank output port 38o and the tank input port 191i.

The third control valve 32 connected to the first external output port 15o has a neutral position (S0) and a drive position (S1, S2). The third control valve 32 at the neutral position (S0) makes the first external output port 15o and the first external input port 192i communicate with each other, and blocks the communication between the parallel output port 13o and the third actuator 9. The third control valve 32 at the drive position (S1, S2) blocks the communication between the first external output port 15o and the first external input port 192i, and makes the parallel output port 13o and the third actuator 9 communicate with each other. Thus, the third control valve 32 is an open center type control valve. In the present embodiment, the drive position (S1, S2) of the third control valve 32 includes an extension position (S1) at which the hydraulic cylinder 9A extends, and a contraction position (S2) at which the hydraulic cylinder 9A contracts.

In the circuit system formed by connecting the third circuit system HC3 to the first circuit system HC1, the first neutral passage 11, the first external output passage 15, the third neutral passage 31, and the first external input passage 192 function as the neutral passage through which the working oil discharged from the first pump 10 returns to the tank T. Thus, in the circuit system formed by connecting the third circuit system HC3 to the first circuit system HC1, the plurality of first control valves 12 and the third control valves 32 are connected in series through the first neutral passage 11, the first external output passage 15, and the third neutral passage 31 serving as the neutral passage, and are connected in parallel through the first parallel passage 13 and the third parallel passage 33.

In the circuit system formed by connecting the third circuit system HC3 to the first circuit system HC1, when the straight traveling control valve 6 described later is at the normal position (A), and all of the first control valves 12 and the third control valves 32 are at the neutral position, the working oil discharged from the first pump 10 returns to the tank T through the first neutral passage 11, the first external output passage 15, the third neutral passage 31, the first external input passage 192, and the discharge passage 19.

As described above, in the present embodiment, the working oil discharged from the first pump 10 to the first neutral passage 11 is guided to the third circuit system HC3 via the neutral cut valve 110, then returns to the first circuit system HC1, and then is guided to the tank T after passing through the neutral cut valve 110.

When at least one of the plurality of first control valves 12 and the third control valves 32 is at the drive position for driving the actuator, the communication between the first pump 10 and the tank T in the first neutral passage 11 and the third neutral passage 31 is blocked. Even when any one of the first control valves 12A to 12D is switched to the drive position, the working oil discharged from the first pump 10 can be supplied to each of the first control valves 12B to 12D and the third control valve 32 through the first parallel passage 13 and the third parallel passage 33.

The second circuit system HC2 includes: a second neutral passage 21 through which the working oil discharged from the second pump 20 is guided to the tank T; a plurality of second control valves 22 connected in series with the second neutral passage 21; a second parallel passage 23 branched off from the second neutral passage 21 more on the upstream side than the second control valve 22; and a discharge passage 19 connected to the tank T. The plurality of second control valves 22 are connected in series through the second neutral passage 21, and are connected in parallel through the second parallel passage 23.

The second control valves 22 that are control valves adapted to control actuators provided to the second circuit system HC2 includes: a second traveling control valve 22A; an auxiliary control valve 22B; a turning control valve 22C; a boom second speed control valve 22D; and an arm first speed control valve 22E. The working oil discharged from the second pump 20 is guided to the second traveling control valve 22A, the auxiliary corresponding control valve 22B, the swiveling control valve 22C, the boom second speed control valve 22D, and the arm first speed control valve 22E in this order from the upstream side.

The second traveling control valve 22A is adapted to control supplying/discharging of the working oil to/from the traveling unit driving hydraulic motor 8A provided on the right side of the vehicle body of the power excavator. The auxiliary corresponding control valve 22B is adapted to control supplying/discharging of the working oil to/from the auxiliary attachment driving hydraulic cylinder 8B. The swiveling control valve 22C is adapted to control supplying/discharging of the working oil to/from a swiveling unit driving hydraulic motor (not illustrated). The boom second speed control valve 22D is adapted to control supplying/discharging of working oil to and from a boom driving hydraulic cylinder (not illustrated). The arm first speed control valve 22E is adapted to control supplying/discharging of the working oil to/from an arm driving hydraulic cylinder (not illustrated). The main actuators (such as the hydraulic motor 8A and the hydraulic cylinder 8B) controlled by using the second control valves 22 will be also collectively referred to as a second actuator 8.

As described above, the second circuit system HC2 includes the plurality of second control valves 22 that is connected to the second pump 20 and is adapted to control the plurality of second actuators 8. The working oil discharged from the second actuator 8 via the second control valve 22 is guided to the tank T through the discharge passage 19. The discharge passage 19 is used as a common passage through which the working oil in the first circuit system HC1 and second circuit system HC2 is guided to the tank T.

In the second circuit system HC2, the working oil discharged from the second pump 20 returns to the tank T through the second neutral passage 21 when all the second control valves 22 are at the neutral positions. On the other hand, when at least one of the plurality of second control valve 22 is at the drive position, the communication between the second pump 20 in the second neutral passage 21 and the tank T is blocked.

In the second circuit system HC2, the working oil discharged from the second pump 20 can be supplied to the second control valve 22B to 22E through the second parallel passage 23, even when the communication between the second pump 20 in the second neutral passage 21 and the tank T is blocked due to any one of the second control valve 22A to 22D being switched to the drive position.

The second circuit system HC2 includes a second external input passage 24 through which the working oil, supplied from the outside, is guided to the upstream side of a predetermined second control valve 22 (the auxiliary control valve 22B in the present embodiment). The second external input passage 24 is connected to the second external input port 24i opening in the outer surface of the main valve block 101.

The first circuit system HC1 further includes the straight traveling control valve 6 connected to a point that is more on the downstream side than the point where the first parallel passage 13 is branched off from the first neutral passage 11 and more on the upstream side than the first traveling control valve 12A. The straight traveling control valve 6 is connected with a second parallel passage 23. The second parallel passage 23 includes a second parallel upstream side passage 23a that connects the second pump 20 and the straight traveling control valve 6 with each other, and a second parallel downstream side passage 23b that connects the straight traveling control valve 6 and the second control valves 22B to 22E to each other.

The straight traveling control valve 6 is switched between two positions that are a normal position (A) illustrated on the right side in FIG. 1 and a straight traveling position (B) illustrated on the left side in FIG. 1. The straight traveling control valve 6 is switched to the straight traveling position B when the working oil is supplied to the pilot pressure chamber 6a. The straight traveling control valve 6 is held at the normal position A by the biasing force from a return spring 6c, when no pilot pressure is applied to the pilot pressure chamber 6a.

When the straight traveling control valve 6 is at the normal position (A), the second parallel upstream side passage 23a of the second parallel passage 23 is connected to the second parallel downstream side passage 23b of the second parallel passage 23, and the first neutral passage 11 more on the downstream side than the straight traveling control valve 6 is connected to the first pump 10. Thus, the working oil discharged from the first pump 10 is guided to the first control valves 12 through the first neutral passage 11 and the first parallel passage 13. The working oil discharged from the second pump 20 is guided to the second control valves 22 through the second neutral passage 21 and the second parallel passage 23.

When the neutral cut valve 110 is at the first position (P1) or the second position (P2), the working oil discharged from the first pump 10 is also guided to the third control valve 32 through the first neutral passage 11, via the neutral cut valve 110, and through the first external output passage 15 and the third neutral passage 31. The working oil discharged from the first pump 10 is also guided to the third control valve 32 through the first parallel passage 13 and the third parallel passage 33.

When the straight traveling control valve 6 is at the straight traveling position (B), the second parallel upstream side passage 23a of the second parallel passage 23 is connected to the first neutral passage 11 more on the downstream side than the straight traveling control valve 6, and the second parallel downstream side passage 23b is connected to the first pump 10. Thus, the working oil discharged from the first pump 10 is guided to the first control valves 12B to 12D through the first parallel passage 13, and is guided to the second control valves 22B to 22E through the second parallel downstream side passage 23b of the second parallel passage 23. The working oil discharged from the second pump 20 is guided to the first control valve 12A through the first neutral passage 11 more on the downstream side than the straight traveling control valve 6, and is guided to the second control valve 22A through the second neutral passage 21.

The working oil discharged from the first pump 10 is also guided to the third control valve 32 through the first parallel passage 13 and the third parallel passage 33. The working oil discharged from the second pump 20 is also guided to the third control valve 32 through the first neutral passage 11, via the neutral cut valve 110, and through the first external output passage 15 and the third neutral passage 31.

In the power excavator traveling in a state with the excavating unit not driven, the pilot pressure chamber 6a is at tank pressure, and the straight traveling control valve 6 is maintained at the normal position (A). Thus, when only the traveling unit driving hydraulic motors 7A and 8A are operated, the working oil discharged from the first pump 10 is supplied to the first traveling control valve 12A and the working oil discharged from the second pump 20 is supplied to the second traveling control valve 22A.

On the other hand, when the excavating unit actuator is driven while the traveling unit driving hydraulic motors 7A and 8A are driven, the pilot pressure is applied to the pilot pressure chamber 6a, so that the straight traveling control valve 6 is switched to the straight traveling position (B). Thus, when the traveling unit driving hydraulic motors 7A and 8A and an actuator other than the hydraulic motors 7A and 8A are concurrently operated, the working oil discharged from the second pump 20 is supplied to the first traveling control valve 12A and the second traveling control valve 22A. Meanwhile, the working oil discharged from the first pump 10 is supplied to the other first control valves 12B to 12D, the other second control valves 22B to 22E, and the third control valve 32. Thus, the circuit for traveling and the circuit for a purpose other than traveling are independent from each other, whereby the vehicle body can reliably travel straight.

Next, the switched positions of the neutral cut valve 110 and the flow of the working oil will be described. The description is given under an assumption that the straight traveling control valve 6 is at the normal position (A).

In the neutral cut valve 110, the spool is maintained at the first position (P1) by biasing force from a centering spring 117, in a state where the first pilot pressure chamber 116a is connected to the tank T with no pilot pressure acting on the first pilot pressure chamber 116a. Thus, the first neutral passage 11 and the first external output port 15o communicate with each other via the neutral cut valve 110, and the first external input port 192i and the discharge passage 19 communicate with each other via the neutral cut valve 110. As described above, the second pilot pressure chamber 116b is connected to the drain. Because the second pilot pressure chamber 116b is connected to the drain, the centering spring 117 on the first pilot pressure chamber 116a side may be omitted.

In this state, when all of the first control valves 12 are at the neutral position, the working oil discharged from the first pump 10 to the first neutral passage 11 is guided to the first external output passage 15 through the neutral cut valve 110, and then is guided to the third neutral passage 31 of the sub valve block 103. When the third control valve 32 is at the neutral position (S0), the working oil guided to the third neutral passage 31 returns to the first external input passage 192 of the main valve block 101 from the first external input port 192i. The working oil guided to the first external input passage 192 is guided to the discharge passage 19 through the neutral cut valve 110 from the branch passage 193a, to be discharged to the tank T.

In this state, the second external output port 14o also communicates with the tank T. Thus, the working oil discharged from the first pump 10 is returned to the tank T without being guided to the second external output port 14o.

Thus, the neutral cut valve 110 at the first position (P1) makes the neutral passage including the first neutral passage 11, the first external output passage 15, the third neutral passage 31, and the first external input passage 192 communicate with the discharge passage 19.

When the working oil is supplied to the first pilot pressure chamber 116a of the neutral cut valve 110, the spool is moved by the pressure of the working oil supplied to the first pilot pressure chamber 116a against the biasing force from the centering spring 117, to switch to the second position (P2). Thus, the communication between the first external input port 192i and the discharge passage 19 is blocked. Meanwhile, the communication state between the first neutral passage 11 and the first external output port 15o is maintained. Thus, the neutral cut valve 110 at the second position (P2) blocks the communication between the discharge passage 19 and the neutral passage including the first neutral passage 11, the first external output passage 15, the third neutral passage 31, and the first external input passage 192.

In this state, when all of the first control valves 12 are at the neutral position, the working oil discharged from the first pump 10 to the first neutral passage 11 is guided to the third neutral passage 31 of the sub valve block 103 via the neutral cut valve 110 and through the first external output passage 15. When the third control valve 32 is at the neutral position (S0), the working oil guided to the third neutral passage 31 returns to the first external input passage 192 of the main valve block 101 from the first external input port 192i. The working oil guided to the first external input passage 192 is guided to the second external output passage 14, and supplied to the outside through the external pipe 30 from the second external output port 14o.

Thus, when the neutral cut valve 110 is at the second position (P2) and all of the first control valves 12 and the third control valves 32 at the neutral positions, the working oil returned to the main valve block 101 from the sub valve block 103 through the first external input port 192i, is entirely supplied to the outside of the main valve block 101 through the second external output passage 14.

Thus, in the fluid pressure control device 100, by switching the neutral cut valve 110 to the second position (P2), the working oil supplied to the first circuit system HC1 from the first pump 10 can be supplied to the outside through the second external output port 14o.

Thus, in the fluid pressure control device 100, for example, the working oil supplied to the first circuit system HC1 from the first pump 10 can be used for driving a newly added actuator (not illustrated) or can be joined to the second circuit system HC2 through the second external output port 14o.

In the present embodiment, the second external output port 14o and the second external input port 24i are connected to each other through the external pipe 30, and the working oil supplied to the outside through the second external output port 14o is joined to the flow passage of the auxiliary attachment driving hydraulic cylinder 8B.

Thus, when the auxiliary control valve 22B is operated in a state where the neutral cut valve 110 is at the second position (P2), the working oil discharged from the first pump 10 is supplied to the auxiliary control valve 22B, in addition to the working oil discharged from the second pump 20, through the first neutral passage 11, the first external output passage 15, the third neutral passage 31, the first external input passage 192, the second external output passage 14, the external pipe 30, and the second external input passage 24.

Thus, in the present embodiment, the working oil discharged from the first pump 10 is guided to the outside through the second external output passage 14 of the first circuit system HC1, and is guided to the upstream side of the auxiliary control valve 22B through the second external input passage 24 of the second circuit system HC2 to join the working oil discharged from the second pump 20.

The neutral cut valve 110 may be configured to be switched in accordance with the pilot pressure Pp adapted to control the auxiliary control valve 22B. In this case, the spring load of the centering spring 117 may be set so that the spool of the neutral cut valve 110 is maintained at the first position (P1) in a state where the pilot pressure Pp is low, and the spool of the neutral cut valve 110 switches to the second position (P2) in a state where the pilot pressure Pp is high.

With this configuration, when the operation amount of the auxiliary control valve 22B is small, the hydraulic cylinder 8B is operated by the working oil discharged from the second pump 20 only. When the operation amount of the auxiliary control valve 22B is large, the hydraulic cylinder 8B is driven by the working oil discharged from the first pump 10 in addition to the working oil discharged from the second pump 20.

Thus, by increasing the operation amount of the auxiliary control valve 22B, the flowrate of the working oil to the auxiliary control valve 22B is increased, so that the speed of the operation of the hydraulic cylinder 8B, controlled with the auxiliary control valve 22B, can be increased. The second control valve 22 connected to the second external input port 24i can be set as appropriate. Thus, according to the present embodiment, the working oil supplied from the second external output port 14o to the second external input port 24i can be supplied to any appropriate one of the second control valves 22. Thus, the flowrate of the working oil supplied to this second control valve 22 is increased, whereby the speed of the operation of the second actuator 8 controlled with this second control valve 22 can be increased.

Although not elaborated in the figure, when the working oil is supplied to a circuit system for driving a newly added actuator through the second external output passage 14, the neutral cut valve 110 may be switched to the second position (P2) when driving the additional actuator.

As described above, the neutral cut valve 110 has the first position (P1) and the second position (P2), and is adapted to perform control to make the first neutral passage 11 and the first external output port 15o communicate with each other, and to make the first neutral passage 11 communicate with the discharge passage 19 or block the communication therebetween. Thus, through the control with the third control valve 32 of the sub valve block 103 and the neutral cut valve 110, the supply destination of the working oil discharged from the first pump 10 can be selected. Thus, with the present embodiment, no valve body and the like for selecting the supply destination is additionally required, whereby the fluid pressure control device 100 can be prevented from being of a large scale.

The operation and the effect of the embodiment described above is follows.
(1) The main valve block 101 includes the first external output port 15o and the second external output port 14o through which the working oil discharged from the first pump 10 can be supplied to the outside of the main valve block 101 via the neutral cut valve 110. Thus, with the neutral cut valve 110, the working oil discharged from the first pump 10 can be supplied to the outside through the first external output port 15o, and to the outside through the second external output port 14o. Thus, the fluid pressure control device 100 with a higher degree of freedom in terms of circuit system expansion can be provided while preventing the main valve block 101 from being of a large scale. The working oil discharged from the first pump 10 that supplies the working oil to the main valve block 101 can also be guided to the sub valve block 103, whereby cost reduction can be achieved because no new hydraulic pump needs to be added.
(2) The main valve block 101 includes the parallel output port 13o through which the working oil guided to the first parallel passage 13 can be supplied to the outside, in addition to the first external output port 15o. Thus, the working oil discharged from the first pump 10 can be supplied to the outside also through the first parallel passage 13. Thus, the fluid pressure control device 100 with a higher degree of freedom in terms of circuit system expansion can be provided while preventing the main valve block 101 from being of a large scale. With the main valve block 101 including the parallel output port 13o, the first control valve 12 of the main valve block 101 and the third control valve 32 of the sub valve block 103 can be connected in parallel to each other, by attaching the sub valve block 103 to the main valve block 101.
(3) The main valve block 101 includes the first external input port 192i enabling the working oil supplied to the sub valve block 103 from the first external output port 15o and returning to the main valve block 101 from the sub valve block 103 to be introduced. The first external input port 192i is connected to the tank T when the neutral cut valve 110 is at the first position (P1).
(4) The first external output port 15o communicates with the first external input port 192i via the third control valve 32 of the sub valve block 103. Thus, when the neutral cut valve 110 is at the second position (P2), and the third control valve 32 is at the neutral position (S0), the working oil introduced through the first external input port 192i can be supplied to the outside through the second external output port 14o. On the other hand, when the third control valve 32 is at the drive position (S1, S2), the third control valve 32 blocks the third neutral passage 31, so that the working oil cannot be supplied to the outside through the second external output port 14o. Thus, according to the configuration of the present embodiment, the working oil returning to the main valve block 101 after passing through the third control valve 32 of the sub valve block 103 is supplied to the outside through the second external output port 14o. Thus, the supplying of the working oil, discharged from the first pump 10, to the sub valve block 103 outside through the first external output port 15o can be implemented with priority over the supplying of the working oil to the outside through the second external output port 14o.
(5) The main valve block 101 includes the tank input port 191i through which the working oil from the sub valve block 103 can be introduced into the discharge passage 19, and the discharge passage 38 of the sub valve block 103 is connected to the discharge passage 19 of the main valve block 101. Thus, no pipe for connecting the discharge passage 38 of the sub valve block 103 to the tank T needs to be separately provided.

### <Second embodiment>

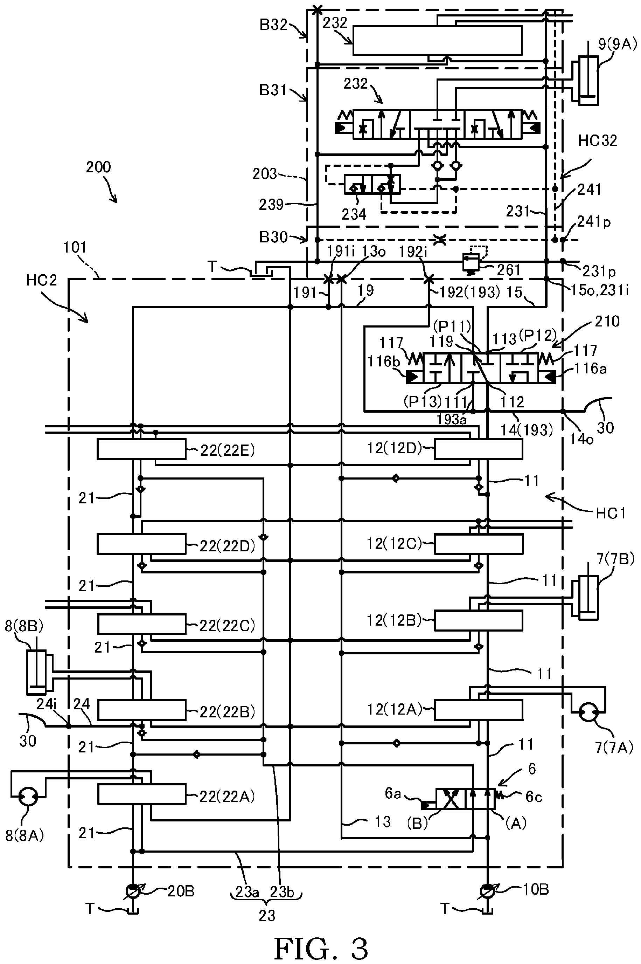

A fluid pressure control device 200 according to a second embodiment according to the invention will be described with reference to FIG. 3. The points different from the first embodiment will be mainly described below, and the configuration that is the same as or corresponding to the configurations described in the first embodiment will be denoted with the same reference numerals and the description thereof will be omitted.

In the example described in the first embodiment, the third control valve 32 of the sub valve block 103 is of an open center type. On the other hand, in the second embodiment, a third control valve 232 of a sub valve block 203 is a control valve of a closed center type.

In the second embodiment, the configurations of the first circuit system HC1 and the second circuit system HC2 are similar to those in the first embodiment, but the configuration of the third circuit system HC32 is different from that in the first embodiment. Furthermore, a neutral cut valve 210 in the second embodiment has a configuration different from that of the neutral cut valve 110 of the first embodiment. Thus, the second embodiment is similar to the first embodiment in the configuration of the main valve block 101 except for the neutral cut valve 210, but is different from the first embodiment in the configuration of the sub valve block 203.

The neutral cut valve 210 is provided on the downstream side of the plurality of first control valves 12 in the first neutral passage 11 as in the first embodiment. The neutral cut valve 210 has a first position (P11), a second position (P12), and a third position (P13). The first position (P11) is a position at which the pump port 112 and the tank port 119 communicate with each other. The neutral cut valve 210 at the first position (P11) makes the first neutral passage 11 and the discharge passage 19 communicate with each other, and blocks the communication between the first neutral passage 11 and the first external output port 15o and between the first neutral passage 11 and the second external output port 14o.

The second position (P12) is a position at which the pump port 112 and the connection port 111 communicate with each other. The neutral cut valve 210 at the second position (P12) makes the first neutral passage 11 and the second external output port 14o communicate with each other, and blocks the communication between the first neutral passage 11 and the first external output port 15o and between the first neutral passage 11 and the discharge passage 19.

The third position (P13) is a position at which the pump port 112 and the outlet port 113 communicate with each other. The neutral cut valve 210 at the third position (P13) makes the first neutral passage 11 and the first external output port 15o communicated with each other, and blocks the communication between the first neutral passage 11 and the second external output port 14o and between the first neutral passage 11 and the discharge passage 19.

The sub valve block 203 including the third circuit system HC32 includes an inlet block B30 through which the working oil from the first circuit system HC1 is taken in, and valve blocks B31 and B32 adapted to control the additional attachment driving third actuator 9. The inlet block B30 also serves as an outlet block for discharging the working oil to the tank T. The valve block B31 has a configuration similar to that of the valve block B32. Thus, the valve block B32 is partially omitted in the drawing. The number of valve blocks can be changed as appropriate in accordance with the number of actuators to be added.

The third circuit system HC32 includes: a plurality of third control valves 232 adapted to control the plurality of third actuators 9; an introduction port 231i connected to the first external output port 15o of the first circuit system HC1; a supply passage 231 connected to the introduction port 231i; a discharge passage 239 connected to the tank T; and a load pressure passage 241 to which the highest load pressure among those of the plurality of third actuators 9 is guided. Thus, the third control valve 232 of the sub valve block 203 is connected to the first external output port 15o as in the first embodiment. The supply passage 231 is adapted to guide the working oil, discharged from the first pump 10B and supplied through the first neutral passage 11 of the main valve block 101, via the neutral cut valve 110, and through the first external output passage 15 and the first external output port 15o, to the third control valve 232. The third control valve 232 is adapted to control the third actuator 9 with the working oil discharged from the first pump 10B and supplied to the supply passage 231 through the main valve block 101.

The inlet block B30 is provided with a discharge pressure output port 231p connected to the supply passage 231 and a load pressure output port 241p connected to the load pressure passage 241. The inlet block B30 is provided with a relief valve 261 connected to the supply passage 231. When the neutral cut valve 110 is at the third position (P13), the relief valve 261 defines the maximum pressure of the circuit formed by connecting the third circuit system HC32 of the sub valve block 203 to the first circuit system HC1 of the main valve block 101.

The valve blocks B31 and B32 each include a third control valve 232 connected to the supply passage 231, and a pressure compensation valve 234 provided between the third control valve 232 and the third actuator 9.

The present embodiment employs a load sensing system of an after orifice type, with the pressure compensation valve 234 provided on the downstream side of a meter in throttle portion of the third control valves 232. In such a load sensing system, when more than one of the third actuator 9 are concurrently operated, the pressure compensation valve 234 functions to adjust loads among the third actuators 9.

The pressure compensation valve 234 is provided with pressure on the downstream side of the meter in throttle portion provided to the third control valve 232 and the highest load pressure among those of the plurality of third actuators 9. The pressure compensation valve 234 is for compensation with which the pressure on the downstream side of the meter in throttle portion becomes higher than the highest load pressure of the third actuators 9 by a predetermined amount.

Thus, in the present embodiment, the hydraulic oil with the flow rate corresponding to the operation amount of the spool of the third control valve 232 regardless of a difference in load pressure among the third actuators 9, when the plurality of third control valve 232 are concurrently driven.

The first pump 10B and the second pump 20B are variable capacity piston pumps, with the discharge capacity varying in accordance with a change in the inclination of a swash plate made by a regulator (not illustrated). The discharge capacity of the first pump 10B and the second pump 20B are controlled by what is known as load sensing control, so that a predetermined value is obtained as a difference between the pump discharge pressure guided to the regulator (not illustrated) and the maximum load pressure of the third actuators 9.

The maximum load pressure of the third actuators 9 is guided to the regulator (not illustrated) of the first pump 10B and second pump 20B from the load pressure output port 241p through a pipe and the like. The pump discharge pressure is guided to the regulator (not illustrated) of the first pump 10B and second pump 20B from the discharge pressure output port 231p through a pipe and the like.

In the second embodiment, the parallel output port 13o, the first external input port 192i, and the tank input port 191i not used in the main valve block 101 are closed by the sub valve block 203. With the unused ports (13o, 191i, and 192i) closed by the sub valve block 203, a closing member such as a plug needs not to be additionally provided, whereby the number of parts can be reduced.

Thus, in the second embodiment, when the neutral cut valve 210 is at the first position (P11), the working oil discharged from the first pump 10B can be discharged to the tank T. When the neutral cut valve 210 is at the second position (P12), the working oil discharged from the first pump 10B can be supplied to the outside through the second external output port 14o. When the neutral cut valve 210 is at the third position (P13), the working oil discharged from the first pump 10B can be supplied to the sub valve block 203 through the first external output port 15o. Thus, the third actuator 9 can be operated with the working oil discharged from the first pump 10B supplied to the third actuator 9 via the third control valve 232 of the sub valve block 203.

As described above, with the second embodiment, the supply destination of the working oil discharged from the first pump 10B can be selected simply by controlling the neutral cut valve 210 and thus no valve body and the like for selecting the supply destination are required, whereby the fluid pressure control device 200 can be prevented from being of a large scale.

With the second embodiment, by using the neutral cut valve 210, the working oil discharged from the first pump 10B can be supplied to the outside through the first external output port 15o and can also be supplied to the outside through the second external output port 14o as in the first embodiment. Thus, the fluid pressure control device 200 with a high degree of freedom in terms of circuit system expansion can be provided while preventing the main valve block 101 from being of a large scale. The working oil discharged from the first pump 10B adapted to supply the working oil to the main valve block 101 can also be guided to the sub valve block 203, and thus no new hydraulic pump needs to be added, whereby cost reduction can be achieved.

As described above, the main valve block 101 according to the second embodiment is the same as that in the first embodiment except for the configuration of the neutral cut valve 210. Thus, when the sub valve block 103 illustrated in FIG. 1 is used, the neutral cut valve 110 may be incorporated in the main valve block 101. When the sub valve block 203 illustrated in FIG. 3 is used, the neutral cut valve 210 may be incorporated in the main valve block 101, and the unused ports (13o, 191i, 192i) in the main valve block 101 may be closed by the sub valve block 203. With the configuration in which the ports (13o, 191i, 192i) are opened in advance, the main valve block needs not to be changed depending on the type of the sub valve block attached. For example, no new main valve block needs to be prepared when the sub valve block 203 having the third control valve 232 of a closed center type (see FIG. 3) is changed to the sub valve block 103 having the third control valve 32 of an open center type (see FIG. 1). Thus, with the present embodiment, the main valve block 101 can be commonly used for the sub valve blocks 103 and 203 of different types.

Thus, the main valve block 101 is compatible with any of open center type (see FIG. 1) and of closed center type (see FIG. 3) third control valves 32 and 232 in the sub valve blocks 103 and 203. With the predetermined ports (15o, 13o, 191i, 192i) provided, highly versatile main valve block 101 can be provided.

As illustrated in FIG. 1 and FIG. 3, the main valve block 101 is configured so that the branch passage 193a branched off from the communication passage 193 is connected to the connection port 111 of the neutral cut valve 110, 210 and the connection port 111 can communicate with the pump port 112 or the tank port 119 via the neutral cut valve 110, 210. Thus, as illustrated in FIG. 3, the working oil discharged from the first pump 10B to the first neutral passage 11 can be guided to the second external output port 14o, by controlling the neutral cut valve 210 to make the connection port 111 and the pump port 112 communicate with each other. Alternatively, as illustrated in FIG. 1, the working oil guided from the first external input port 192i to the communication passage 193 can be introduced to the discharge passage 19, by controlling the neutral cut valve 110 to make the connection port 111 and the tank port 119 communicate with each other.

Modifications as described below also fall within the scope of the present invention only when applied to the second embodiment, the first embodiment being not according the claimed invention.

Configurations illustrated in the modifications can be combined with configurations illustrated in the above-described embodiments. Configurations illustrated in different embodiments described above can be combined. Configurations illustrated in different modifications described below can be combined.

### <Modification 1>

In the examples described in the embodiments, the first actuator 7 and the first control valve 12 are each provided in a plurality. However, the present invention is not limited to this. It suffices if at least one first actuator 7 and at least one first control valve 12 are provided. In the example described in the embodiment, the second actuator 8 and the second control valve 22 are each provided in a plurality. However, the present invention is not limited to this. It suffices if at least one second actuator 8 and at least one second control valve 22 are provided.

### <Modification 2>

In the example described in the embodiment, the neutral cut valve 110, 210 is provided to the first neutral passage 11 of the first circuit system HC1. However, the present invention is not limited to this. The second neutral passage 21 may be provided with a neutral cut valve having the same function as the neutral cut valve 110, 210, instead of or in addition to the neutral cut valve 110, 210 provided to the first neutral passage 11.

Specifically, the second circuit system HC2 may be provided with an external output passage similar to the first external output passage 15 and second external output passage 14 of the first circuit system HC1 described in the above embodiment, a sub valve block similar to the sub valve block 103, 203 described in the above embodiment is attached to the main valve block 101, and the circuit system of the sub valve block may be connected to the second circuit system HC2. Furthermore, the working oil from the second circuit system HC2 may be joined to the first circuit system HC1 by using the neutral cut valve provided to the second circuit system HC2.

### <Modification 3>

In the example described in the second embodiment, the discharge passage 239 of the sub valve block 203 communicates with the tank T without the main valve block 101 being provided in between. However, the present invention is not limited to this. The discharge passage 239 of the sub valve block 203 may be connected to the tank input port 191i of the main valve block 101. With the discharge passage 239 of the sub valve block 203 connected to the discharge passage 19 of the main valve block 101, no pipe for connecting the discharge passage 239 of the sub valve block 203 to the tank T needs to be separately provided.

The configuration, the operation, and effect of the embodiments described above configured as described above will be summarized and described below. The fluid pressure control device 100 is not according to the claimed invention.

The fluid pressure control device 100, 200 is a fluid pressure control device for controlling an actuator driven by a working fluid discharged from a pump (first pump 10, 10B, second pump 20, 20B), and including a main valve block 101, a sub valve block 103, 203 attachable to the main valve block 101. The main valve block 101 includes a control valve (first control valve 12, second control valve 22) connected to the pump (first pump 10, 10B, second pump 20, 20B) and configured to control a main actuator (first actuator 7, second actuator 8), a neutral passage (first neutral passage 11, second neutral passage 21) through which the working fluid from the pump (first pump 10, 10B, second pump 20, 20B) returns to a tank T when the control valve (first control valve 12, second control valve 22) is at a neutral position, a discharge passage 19 connected to the tank T, a neutral cut valve 110, 210 that makes the neutral passage (first neutral passage 11, second neutral passage 21) and the discharge passage 19 communicate with each other or blocks the communication therebetween, and a first external output port 15o and second external output port 14o through which the working fluid discharged from the pump (first pump 10, 10B, second pump 20, 20B) is able to be supplied to outside via the neutral cut valve 110, 210. The sub valve block 103, 203 includes a control valve (third control valve 32, 232) configured to control a sub actuator (third actuator 9). The control valve (third control valve 32, 232) of the sub valve block 103, 203 is connected to the first external output port 15o.

With this configuration, the neutral cut valve 110, 210 is used so that the working fluid discharged from the pump (first pump 10, 10B, second pump 20, 20B) can be supplied to the outside through the first external output port 15o, and to the outside through the second external output port 14o. Thus, the fluid pressure control device 100, 200 with a higher degree of freedom in terms of circuit system expansion can be provided while preventing the main valve block 101 from being of a large scale. The working fluid discharged from the pump (first pump 10, 10B, second pump 20, 20B) that supplies the working fluid to the main valve block 101 can also be guided to the sub valve block 103, 203, whereby cost reduction can be achieved because no pump needs to be added.

In fluid pressure control device 100, 200, the main valve block 101 includes a parallel passage (first parallel passage 13, second parallel passage 23) branched off from the neutral passage (first neutral passage 11, second neutral passage 21) and connected to the control valve (first control valve 12, second control valve 22) of the main valve block 101, and a parallel output port 13o through which the working fluid guided to the parallel passage (first parallel passage 13, second parallel passage 23) is able to be supplied to the outside.

With this configuration, the working fluid discharged from the pump (first pump 10, 10B, second pump 20, 20B) can be supplied to the outside also through the parallel passage (first parallel passage 13, second parallel passage 23). Thus, the fluid pressure control device 100, 200 with a higher degree of freedom in terms of circuit system expansion can be provided while preventing the main valve block 101 from being of a large scale.

In the fluid pressure control device 100, 200, the main valve block 101 includes a communication passage 193 connected to the second external output port 14o, and a first external input port 192i that communicates with the second external output port 14o through the communication passage 193. The neutral cut valve 110, 210 includes a pump port 112 connected to the neutral passage (first neutral passage 11, second neutral passage 21), a tank port 119 connected to the discharge passage 19, and a connection port 111 connected to a branch passage 193a branched off from the communication passage 193. The connection port 111 is able to communicate with the pump port 112 or the tank port 119 via the neutral cut valve 110, 210.

With this configuration, the branch passage 193a branched off from the communication passage 193 is connected to the connection port 111 of the neutral cut valve 110, 210 and the connection port 111 can communicate with the pump port 112 or the tank port 119 via the neutral cut valve 110, 210. Thus, the working fluid discharged from the pump (first pump 10, 10B, second pump 20, 20B) to the neutral passage (first neutral passage 11, second neutral passage 21) can be guided to the second external output port 14o, by controlling the neutral cut valve 210 to make the connection port 111 and the pump port 112 communicate with each other. Alternatively, the working fluid guided from the first external input port 192i to the communication passage 193 can be introduced to the discharge passage 19, by controlling the neutral cut valve 110 to make the connection port 111 and the tank port 119 communicate with each other.

In the fluid pressure control device 100, the first external output port 15o communicates with the first external input port 192i via the control valve (third control valve 32) of the sub valve block 103.

With this configuration, the working fluid discharged from the pump (first pump 10, 10B, second pump 20, 20B) can be supplied to the sub valve block 103 with priority.

In the fluid pressure control device 100, the neutral cut valve 110 is configured to implement control to make the neutral passage (first neutral passage 11, second neutral passage 21) and the discharge passage 19 communicate with each other or to blocks the communication therebetween, while making the neutral passage (first neutral passage 11, second neutral passage 21) and the first external output port 15o communicate with each other. The control valve (third control valve 32) of the sub valve block 103 has a neutral position (S0) at which the first external output port 15o and the first external input port 192i communicate with each other, and block communication between the parallel output port 13o and the sub actuator (third actuator 9), and a drive position (S1,S2) at which communication between the first external output port 15o and the first external input port 192i is blocked and the parallel output port 13o and the sub actuator (third actuator 9) communicate with each other.

With this configuration, the supply destination of the working fluid discharged from the pump (first pump 10, 10B, second pump 20, 20B) can be selected by controlling the control valve (third control valve 32) of the sub valve block 103 and the neutral cut valve 110, and thus no valve body and the like for selecting the supply destination are required, whereby the fluid pressure control device 100 can be prevented from being of a large scale.

In the fluid pressure control device 200, the neutral cut valve 210 has a first position (P11) at which the neutral passage (first neutral passage 11, second neutral passage 21) and the discharge passage 19 communicate with each other, communication between the neutral passage (first neutral passage 11, second neutral passage 21) and the first external output port 15o is blocked, and communication between the neutral passage (first neutral passage 11, second neutral passage 21) and the second external output port 14o is blocked, a second position (P12) at which the neutral passage (first neutral passage 11, second neutral passage 21) and the second external output port 14o communicate with each other, communication between the neutral passage (first neutral passage 11, second neutral passage 21) and the first external output port 15o is blocked, and communication between the neutral passage (first neutral passage 11, second neutral passage 21) and the discharge passage 19 is blocked, and a third position (P13) at which the neutral passage (first neutral passage 11, second neutral passage 21) and the first external output port 15o communicate with each other, communication between the neutral passage (first neutral passage 11, second neutral passage 21) and the second external output port 14o is blocked, and communication between the neutral passage (first neutral passage 11, second neutral passage 21) and the discharge passage 19 is blocked.

With this configuration, the supply destination of the working fluid discharged from the pump (first pump 10,10B, second pump 20,20B) can be selected simply by controlling the neutral cut valve 210, and thus no valve body and the like for selecting the supply destination are required, whereby the fluid pressure control device 200 can be prevented from being of a large scale.

In the fluid pressure control device 200, the first external output port 15o is connected to the control valve (third control valve 232) of the sub valve block 203, and the parallel output port 13o and the first external input port 192i are blocked by the sub valve block 203.

With this configuration, the port (13o, 192i) not used is closed by the sub valve block 203. With the configuration in which the parallel output port 13o and the first external input port 192i are opened in advance, the main valve block 101 needs not to be changed depending on the type of the sub valve block attached, and thus the main valve block 101 can be commonly used for the sub valve blocks 103 and 203 of different types.

In the fluid pressure control device 100, 200, the sub valve block 103, 203 includes a discharge passage 38, 239 through which the working fluid discharged from the sub actuator (third actuator 9) is guided, and the discharge passage 38, 239 of the sub valve block 103, 203 is connected to the discharge passage 19 of the main valve block 101.

With this configuration, the discharge passage 38, 239 of the sub valve block 103, 203 is connected to the discharge passage 19 of the main valve block 101, and thus no pipe for connecting the discharge passage 38, 239 of the sub valve block 103, 203 to the tank T needs to be separately provided.

In the fluid pressure control device 100, 200, the main valve block 101 includes a second external input port 24i through which the working fluid is able to be introduced, and the second external output port 14o and the second external input port 24i are connected to each other through an external pipe 30.

With this configuration, by supplying the working fluid supplied from the second external output port 14o to the second external input port 24i to any appropriate one of the control valves (first control valve 12, second control valve 22), the flowrate of the working fluid supplied to this control valve (first control valve 12, second control valve 22) is increased, whereby the speed of the operation of the actuator (first actuator 7, second actuator 8) controlled with this control valve (first control valve 12, second control valve 22) can be increased.

## Claims

1. A fluid pressure control device (200) for controlling an actuator driven by a working fluid discharged from a pump (10B), the fluid pressure control device (200) comprising:
a pump (10B),
a tank (T),
a main valve block (101), and
a sub valve block (203) attachable to the main valve block (101), wherein
the main valve block (101) includes
a control valve (12) connected to the pump (10B) and configured to control a main actuator (7),
a neutral passage (11) through which the working fluid from the pump (10B) returns to the tank (T) when the control valve (12) is at a neutral position,
a discharge passage (19) connected to the tank (T),
a neutral cut valve (210) that makes the neutral passage (11) and the discharge passage (19) communicate with each other or blocks communication between the neutral passage (11) and the discharge passage (19), and
a first external output port (15o) and a second external output port (14o) through which the working fluid discharged from the pump (10B) is able to be supplied to outside via the neutral cut valve (210),
the sub valve block (203) includes a control valve (232) configured to control a sub actuator (9), and
the control valve (232) of the sub valve block (203) is connected to the first external output port (15o),
wherein
the neutral cut valve (210) has a first position (P11) at which the neutral passage (11) and the discharge passage (19) communicate with each other, communication between the neutral passage (11) and the first external output port (15o) is blocked, and communication between the neutral passage (11) and the second external output port (14o) is blocked,
a second position (P12) at which the neutral passage (11) and the second external output port (14o) communicate with each other, communication between the neutral passage (11) and the first external output port (15o) is blocked, and communication between the neutral passage (11) and the discharge passage (19) is blocked, and
a third position (P13) at which the neutral passage (11) and the first external output port (15o) communicate with each other, communication between the neutral passage (11) and the second external output port (14o) is blocked, and communication between the neutral passage (11) and the discharge passage (19) is blocked.

2. The fluid pressure control device according to claim 1, wherein
the sub valve block (203) includes a discharge passage (239) through which the working fluid discharged from the sub actuator (9) is guidable, and
the discharge passage (239) of the sub valve block (203) is connected to the discharge passage (19) of the main valve block (101).

3. The fluid pressure control device according to claims 1 or 2, wherein
the main valve block (101) includes an external input port (24i) through which the working fluid is able to be introduced, and
the second external output port (14o) and the external input port (24i) are connected to each other through an external pipe (30).

## Patentansprüche

1. Eine Fluiddrucksteuerungsvorrichtung (200) zum Steuern eines Aktuators angetrieben durch ein Arbeitsfluid ausgegeben von einer Pumpe (10B), die Fluiddrucksteuerungsvorrichtung (200) weist auf:
eine Pumpe (10B),
einen Tank (T),
einen Hauptventilblock (101), und
einen Nebenventilblock (203) anbringbar an den Hauptventilblock (101), wobei
der Hauptventilblock (101) beinhaltet
ein Steuerventil (12) verbunden mit der Pumpte (10B) und konfiguriert, um einen Hauptaktuator (7) zu steuern,
eine neutrale Passage (11), durch die das Arbeitsfluid von der Pumpe (10B) zurück zum Tank (T) gelangt, wenn das Steuerventil (12) an einer neutralen Position ist,
eine Ablaufpassage (19) verbunden mit dem Tank (T),
ein neutrales Absperrventil (210), das bewirkt, dass die neutrale Passage (11) und die Ablaufpassage (19) miteinander kommunizieren oder die Kommunikation zwischen der neutralen Passage (11) und der Ablaufpassage (19) blockiert ist, und
eine erste externe Ausgabemündung (15o) und eine zweite externe Ausgabemündung (14o), durch die das Arbeitsfluid ausgegeben von der Pumpe (10B) in der Lage ist, nach außen über das neutrale Absperrventil (210) gegeben zu werden,
der Nebenventilblock (203) beinhaltet ein Steuerventil (232) konfiguriert, um einen Nebenventilblock (9) zu steuern, und
das Steuerventil (232) des Nebenventilblocks (203) mit der ersten externen Ausgabemündung (15o) verbunden ist, wobei
das neutrale Absperrventil (210) eine erste Position (P11) hat, bei der die neutrale Passage (11) und die Ablaufpassage (19) miteinander kommunizieren, die Kommunikation zwischen der neutralen Passage (11) und der ersten externen Ausgabemündung (15o) blockiert ist, und Kommunikation zwischen der neutralen Passage (11) und der zweiten externen Ausgabemündung (14o) blockiert ist,
eine zweite Position (P12), bei der die neutrale Passage (11) und die zweite externe Ausgabemündung (14o) miteinander kommunizieren, Kommunikation zwischen der neutralen Passage (11) und der ersten externen Ausgabemündung (15o) blockiert ist, und Kommunikation zwischen der neutralen Passage (11) und der Ablaufpassage (19) blockiert ist, und
eine dritte Position (P13), bei der die neutrale Passage (11) und die erste externe Ausgabemündung (15o) miteinander kommunizieren, Kommunikation zwischen der neutralen Passage (11) und der zweiten externen Ausgabemündung (14o) blockiert ist, und Kommunikation zwischen der neutralen Passage (11) und der Ablaufpassage (19) blockiert ist.

2. Die Fluidsteuerungsvorrichtung gemäß Anspruch 1, wobei
der Nebenventilblock (203) eine Ausgabepassage (239) beinhaltet, durch die das Arbeitsfluid ausgegeben von dem Nebenaktuator (9), führbar ist, und
die Ausgabepassage (239) des Nebenventilblocks (203) mit der Ablaufpassage (19) des Hauptventilblocks (101) verbunden ist.

3. Die Fluiddrucksteuerungsvorrichtung gemäß Anspruch 1 oder 2, wobei
der Hauptventilblock (101) eine externe Einflussmündung (24i) hat, durch die das Arbeitsfluid einführbar, und
die zweite externe Ausgabemündung (14o) und die externe Einflussmündung (24i) miteinander durch ein externes Rohr (30) verbunden sind.

## Revendications

1. Dispositif de régulation de pression de fluide (200) pour commander un actionneur piloté par un fluide de fonctionnement déchargé depuis une pompe (10B), le dispositif de régulation de pression de fluide (200) comprenant :
une pompe (10B),
un réservoir (T),
un bloc principal de soupape (101), et
un sous-bloc de soupape (203) rattachable au bloc principal de soupape (101), dans lequel le bloc principal de soupape (101) inclut
une soupape de commande (12) connectée à la pompe (10B) et configurée pour commander un actionneur principal (7),
un passage neutre (11) à travers lequel le fluide de fonctionnement issu de la pompe (10B) retourne au réservoir (T) lorsque la soupape de commande (12) est sur une position neutre,
un passage de décharge (19) connecté au réservoir (T),
une soupape d'arrêt neutre (210) qui fait communiquer le passage neutre (11) et le passage de décharge (19) l'un avec l'autre ou bloque une communication entre le passage neutre (11) et le passage de décharge (19), et
un premier port de sortie externe (15o) et un deuxième port de sortie externe (14o) à travers lesquels le fluide de fonctionnement déchargé depuis la pompe (10B) est en mesure d'être fourni vers l'extérieur via la soupape d'arrêt neutre (210),
le sous-bloc de soupape (203) inclut une soupape de commande (232) configurée pour commander un sous-actionneur (9), et
la soupape de commande (232) du sous-bloc de soupape (203) est connectée au premier port de sortie externe (15o),
dans lequel la soupape d'arrêt neutre (210) présente une première position (P11) sur laquelle le passage neutre (11) et le passage de décharge (19) communiquent l'un avec l'autre, une communication entre le passage neutre (11) et le premier port de sortie externe (15o) est bloquée, et une communication entre le passage neutre (11) et le deuxième port de sortie externe (14o) est bloquée,
une deuxième position (P12) sur laquelle le passage neutre (11) et le deuxième port de sortie externe (14o) communiquent l'un avec l'autre, une communication entre le passage neutre (11) et le premier port de sortie externe (15o) est bloquée, et une communication entre le passage neutre (11) et le passage de décharge (19) est bloquée, et
une troisième position (P13) sur laquelle le passage neutre (11) et le premier port de sortie externe (15o) communiquent l'un avec l'autre, une communication entre le passage neutre (11) et le deuxième port de sortie externe (14o) est bloquée, et une communication entre le passage neutre (11) et le passage de décharge (19) est bloquée.

2. Le dispositif de régulation de pression de fluide selon la revendication 1, dans lequel
le sous-bloc de soupape (203) inclut un passage de décharge (239) à travers lequel le fluide de fonctionnement déchargé depuis le sous-actionneur (9) est guidable, et
le passage de décharge (239) du sous-bloc de soupape (203) est connecté au passage de décharge (19) du bloc principal de soupape (101).

3. Le dispositif de régulation de pression de fluide selon la revendication 1 ou 2, dans lequel
le bloc principal de soupape (101) inclut un port d'entrée externe (24i) à travers lequel le fluide de fonctionnement est en mesure d'être introduit, et
le deuxième port de sortie externe (14o) et le port d'entrée externe (24i) sont connectés l'un à l'autre via un tuyau externe (30).
